# FASCICULE DE BREVET EUROPEEN

(11) **EP 0 394 081 B1**
(45) Date de publication et mention de la délivrance du brevet: **23.02.1994**
(21) Numéro de dépôt: 90400822.4
(22) Date de dépôt: 26.03.1990
(51) Int. Cl.: B29C 67/14, B29C 67/18, B29C 69/00, B29C 71/04

(54) **Procédé de fabrication d'un matériau composite constitué d'une matrice thermoplastique renforcée par des fibres longues et matériau composite obtenu par ce procédé**
Verfahren zum Herstellen eines Verbundwerkstoffs aus einer mit langen Fasern verstärkten thermoplastischen Matrix und nach diesem Verfahren hergestellter Verbundwerkstoff
Method for producing a composite comprising a thermoplastic matrix reinforced with long fibres, and composite obtained by this method

(30) Priorité: 31.03.1989 FR 8904327
(43) Date de publication de la demande: 24.10.1990
(73) Titulaire: OFFICE NATIONAL D'ETUDES ET DE RECHERCHES AEROSPATIALES, 92322 Chatillon sous Bagneux (FR)
(72) Inventeur: Marais, Christian, F-91360 Epinay-sur-Orge (FR); Desarmot, Georges, F-75019 Paris (FR)
(74) Mandataire: Plaçais, Jean-Yves

(56) Documents cités:
- EP-A- 0 303 909
- WO-A-89/00216
- DE-B- 1 268 817
- FR-A- 1 202 058
- FR-A- 1 245 513
- FR-A- 1 376 302
- GB-A- 1 260 409
- GB-A- 2 137 297
- US-A- 3 620 880
- US-A- 3 778 898

## Description

L'invention concerne les matériaux composites dits "stratifiés" ou "feuilletés" et constitués de l'empilement de couches d'un matériau formé d'une matrice organique thermoplastique renforcée par des fibres longues, ces fibres étant noyées dans la matrice.

Pour répondre aux besoins de diverses applications, on a développé des matériaux composites réalisés avec des couches de matériaux à base de résine synthétique renforcée par des fibres, différant les uns des autres, notamment, par la nature de la résine, par celle des fibres et par la configuration des couches. A l'origine les résines synthétiques étaient exclusivement, et elles sont encore le plus souvent, des résines thermodurcissables. Ces résines se présentent avant durcissement sous la forme de monomères ou de prépolymères de faible poids moléculaire, qui sont fluides, ou forment avec des solvants des solutions fluides, à la température ambiante ou à une température inférieure à leur température de durcissement, ce qui rend relativement aisée l'imprégnation des fibres ; mais les matériaux composites obtenus sont fragiles, peu tenaces et leur mise en oeuvre est relativement longue.

On a proposé récemment d'utiliser des résines thermoplastiques. Mais ces résines sont très visqueuses à l'état fondu et les plus intéressantes ne sont pas solubles dans des solvants courants, et ne permettent donc pas d'imprégner facilement les fibres.

La Demande de Brevet FR-A-2 570 329 décrit un procédé et un dispositif pour réaliser un matériau composite comprenant au moins une nappe de fibres et une matrice en résine thermoplastique , les fibres étant notamment en verre et se présentant sous forme de feutres ou de mats de fibres courtes entrecroisées, et la matrice étant en polypropylène. Dans ce procédé l'imprégnation des fibres se fait par extrusion de la résine thermoplastique puis par calandrage. Le matériau obtenu présente des propriétés mécaniques moins bonnes que les matériaux composites à matrices thermodurcissables.

Selon les applications, les fibres de renforcement sont des fibres minérales, notamment des fibres de verre ou de carbone, ou des fibres organiques synthétiques.

Quant à la configuration des couches de fibres c'est le plus souvent celle d'un tissu bi-directionnel de mèches de fibres longues (taffetas, sergé, satin) ou multidirectionnel ou, encore, d'un tissu de feutres ou de mats de mèches de fibres courtes.

On trouve aussi des matériaux composites constitués d'un empilement de couches dans lesquelles les fibres longues sont parallèles entre elles. Selon l'application recherchée l'orientation des couches, repérée par la direction des fibres, doit être la même, ou différente. Pour cela, il faut disposer d'un produit semi-ouvré, appelé "nappe" ou "pli" préimprégné, constitué de fibres parallèles juxtaposées liées par une matrice, que l'on peut découper et disposer selon l'orientation choisie.

Jusqu'à présent de tels matériaux préimprégnés comprenant des fibres parallèle n'ont pu être réalisés qu'avec des matrices thermodurcissables ou des matrices thermoplastiques se présentant sous forme pâteuse ou pulvérulente.

Un but de l'invention est donc de réaliser un matériau préimprégné de ce type avec une matrice thermoplastique se présentant non plus sous forme pâteuse ou pulvérulente mais sous forme d'un film mince.

L'invention a pour objet un procédé de fabrication d'un matériau composite constitué de l'empilement de couches d'un matériau préimprégné comprenant une matrice thermoplastique renforcée par des fibres longues, caractérisé en ce que, pour réaliser chacune des couches de préimprégné, on presse contre une face d'au moins un film thermoplastique des brins sensiblement parallèles d'une mèche de fibres, toutes les fibres des brins étant soumises à une tension sensiblement uniforme dans leur direction longitudinale, on chauffe le film à une température inférieure à la température de fusion des fibres, tout en étant suffisante pour le faire fondre à l'état pâteux, au moins partiellement, en mouillant, au moins en partie, la surface de toutes les fibres, et on refroidit la matrice de façon à la solidifier en immobilisant les fibres et en les maintenant sous tension, pour obtenir une couche de matériau préimprégné dans laquelle toutes les fibres sont sensiblement parallèles et équitendues.

Les fibres étant tendues longitudinalement et pressées contre le film thermoplastique pendant la fusion et la solidification de celui-ci, il en résulte un bon contact entre les fibres et la matrice thermoplastique sur toute leur longueur et le maintien de leur tension lors des découpes ultérieures. Même si les fibres ne sont pas noyées sur tout leur périmètre par la matrice thermoplastique en raison de la viscosité de celle-ci à l'état fondu, cette imprégnation sera complétée ultérieurement lors de l'empilage des couches ainsi réalisées.

En fonction du taux de fibres souhaité dans le produit final et de l'épaisseur des films dont on dispose, on peut utiliser un ou deux films thermoplastiques, les brins étant dans ce dernier cas disposés entre les deux films et pressés contre les faces en regard de ceux-ci, lesquels sont tous deux fondus pour mouiller la surface des fibres.

Selon un mode de mise en oeuvre de l'invention, on enroule un film thermoplastique autour d'un tambour, on enroule une mèche de fibres par-dessus le film, circonférentiellement et avec un pas équivalent à la largeur de la mèche, une première extrémité de la mèche étant fixée par rapport au tambour en début d'enroulement, la mèche étant maintenue sous tension longitudinale au cours de l'enroulement et la seconde extrémité de la mèche étant fixée par rapport au tambour en fin d'enroulement, on enroule le cas échéant un second film thermoplastique autour de la mèche enroulée, et on découpe l'enroulement résultant selon une génératrice du tambour après solidification de la résine, pour obtenir une couche de matériau préimprégné comportant des fibres séparées parallèles.

Selon un autre mode de mise en oeuvre, on dispose une multiplicité de mèches parallèles continues côte à côte sur une bande continue de film thermoplastique et on fait avancer l'ensemble dans un jeu de calandres dans une enceinte où règne ladite température, les mèches étant soumises à une tension longitudinale au cours de leur déplacement.

Dans le cas où on utilise deux films thermoplastiques de part et d'autre des fibres comme indiqué plus haut, les mèches sont placées entre deux bandes d'un tel film.

De préférence, la mise en contact des fibres et du ou des films en début de calandrage se fait sous pression réduite.

Le procédé selon l'invention est avantageusement complété par une étape consistant à empiler une multiplicité de couches de matériau ainsi préimprégné et à les lier ensemble par pressage à chaud pour réaliser le matériau composite.

Selon un second aspect, l'invention a pour but d'améliorer les propriétés mécaniques d'un matériau composite comprenant une matrice thermoplastique renforcée par des fibres.

Selon l'invention, qui s'applique notamment, mais non exclusivement, aux matériaux composites obtenus par le procédé défini ci-dessus, on irradie le matériau composite par un faisceau de rayons électromagnétiques ou de particules à une dose convenable pour consolider la matrice thermoplastique en provoquant une réticulation de la matrice sans atteindre la dégradation des fibres.

Le matériau thermoplastique constituant la matrice, aussi bien dans le premier aspect que dans le second aspect de l'invention, peut être notamment du polyéthylène.

Quant aux fibres, elles peuvent être également en polyéthylène ayant une masse moléculaire et/ou un taux de cristallinité plus élevés que ceux de la matrice.

Il convient de remarquer à cet égard que le terme "matériau composite" est utilisé ici pour désigner un matériau dont les constituants n'ont pas nécessairement des natures chimiques différentes, mais présentent des formes physiques différentes, leur nature chimique pouvant être semblable ou non.

Dans un exemple de réalisation de l'invention, la masse moléculaire du polyéthylène constituant les fibres est supérieure à 500 000 et celle du polyéthylène constituant la matrice est d'environ 35 000.

Quant au taux de cristallinité, il peut être d'environ 90% pour le polyéthylène des fibres et d'environ 65% pour le polyéthylène de la matrice.

L'invention vise également, en tant que produit nouveau, un matériau composite comprenant une matrice thermoplastique renforcée par des fibres longues et formé d'un empilement de couches parallèles de matériau préimprégné à film thermoplastique dans chacune desquelles les fibres s'étendent sensiblement dans une même direction et sont soumises à une tension sensiblement uniforme, et dans lequel toutes les fibres sont partiellement encastrées dans la matrice thermoplastique la matrice étant notamment du polyéthylène.

Selon un exemple de mise en oeuvre de l'invention, les fibres sont également en polyéthylène. Il est alors avantageux que le polyéthylène constituant les fibres ait une masse moléculaire et/ou un taux de cristallinité plus élevés que le polyéthylène constituant la matrice.

Selon une caractéristique préférée du matériau composite selon l'invention, la matrice est réticulée.

D'autres caractéristiques et avantages de l'invention ressortiront de la description détaillée ci-après et des dessins annexés dans lesquels :
- la figure 1 représente schématiquement un dispositif pour la mise en oeuvre d'une première phase du procédé selon l'invention ;
- la figure 2 représente schématiquement un dispositif pour la mise en oeuvre d'une seconde phase du procédé ;
- la figure 3 est une vue partielle en coupe transversale d'une couche de matériau préimprégné obtenue à l'aide des dispositifs des figures 1 et 2 ;
- la figure 4 représente schématiquement un dispositif pour la mise en oeuvre d'une variante du procédé ;
- la figure 5 illustre schématiquement le processus de réticulation de la matrice thermoplastique par un faisceau d'électrons ;
- la figure 6 illustre schématiquement les effets de doses croissantes d'irradiation par le faisceau d'électrons ;
- la figure 7 est un diagramme montrant les effets du taux de fibres et de la dose d'irradiation sur le module d'élasticité en flexion d'un matériau composite selon l'invention ;
- la figure 8 est un diagramme montrant le module d'élasticité et le module d'élasticité spécifique d'un matériau composite selon l'invention, comparé à ceux de matériaux composites connus fibres-résine époxyde ;
- la figure 9 est un diagramme analogue à la figure 7, montrant la contrainte à la rupture et la contrainte à la rupture spécifique.

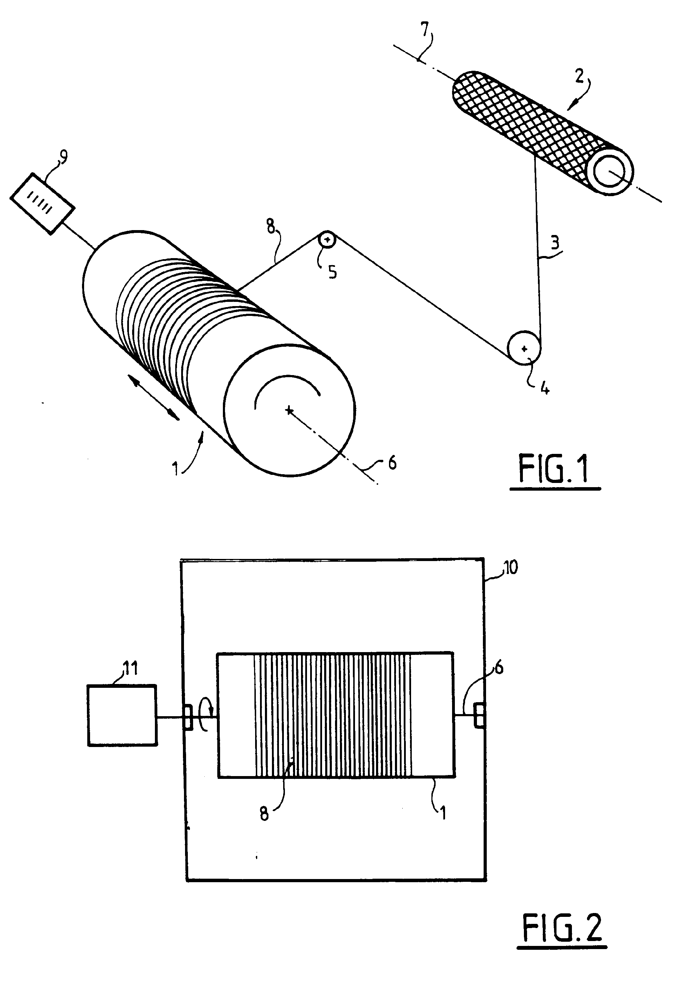

Pour mettre en oeuvre le procédé selon l'invention à l'aide du dispositif de la figure 1, on applique d'abord un film thermoplastique destiné à former la matrice sur la surface cylindrique d'un tambour 1, sur toute la circonférence de celui-ci, et on maintient le film sur la surface du tambour à l'aide d'un adhésif résistant à la chaleur. Les fibres sont ensuite enroulées par-dessus le film à partir d'une bobine débitrice 2. Les fibres se présentent de façon classique sous la forme d'une mèche 3 composée d'une multiplicité de fibres ou filaments unitaires. On fait passer la mèche 3 sur une première poulie 4 et une seconde poulie 5 à partir de laquelle elle s'étend jusqu'au tambour 1, l'extrémité libre de la mèche étant fixée sur la face externe du film thermoplastique par un adhésif du même type que celui servant à fixer le film lui-même. L'enroulement s'effectue en faisant tourner le tambour 1 autour de son axe et en le déplaçant le long de ce même axe par des moyens moteurs non représentés. Les poulies 4 et 5 sont placées dans un plan fixe, perpendiculaire à l'axe 6 et à l'axe 7 de la bobine 2. Cette dernière est entraînée dans le sens du dévidage par la traction que le tambour exerce sur la mèche. Des moyens sont prévus pour freiner le mouvement de la bobine 2, par exemple sous forme de deux flasques non représentés entre lesquels elle est légèrement serrée, pour assurer une tension longitudinale des fibres. Les poulies sont de préférence en polytétrafluoréthylène pour éviter d'endommager les fibres.

Les mouvements du tambour 1 sont coordonnés de façon à réaliser un enroulement filamentaire circonférentiel d'un pas très faible correspondant sensiblement à la largeur de la mèche, le brin 8 de celle-ci compris entre la poulie 5 et le tambour occupant une position fixe dans l'espace. Le tambour 1 est équipé d'un compte-tours 9 permettant de comptabiliser le nombre de tours effectué.

La figure 2 illustre l'étape suivante du procédé. Le tambour 1 portant le film thermoplastique et la mèche de fibres enroulés est introduit dans une étuve 10. L'intérieur de l'étuve est porté à une température suffisante pour permettre au film thermoplastique de fondre au moins partiellement et de mouiller les fibres. Une température uniforme sur tout le périmètre du tambour est obtenue en faisant tourner celui-ci autour de son axe 6, pendant l'étuvage, au moyen d'un moteur 11. La température nécessaire dans l'étuve peut être déterminée facilement en soumettant au préalable un échantillon du film thermoplastique à une analyse calorimétrique différentielle.

Après refroidissement et solidification de la matrice thermoplastique les fibres sont immobilisées par rapport à celle-ci en conservant la tension longitudinale qui leur a été appliquée lors de l'enroulement. En incisant le manchon préimprégné ainsi réalisé le long d'une génératrice du tambour 1, et en le déroulant à plat après avoir éliminé l'adhésif utilisé pour fixer le film et la mèche, on obtient une couche rectangulaire de matériau préimprégné comprenant une multiplicité de fibres parallèles entre elles et équitendues. Les fibres sont très faiblement inclinées (< 0,3°) par rapport aux côtés du rectangle par suite de l'enroulement réalisé avec un pas équivalent à la largeur de la mèche.

A titre d'exemple, on utilise dans le procédé qui vient d'être décrit un film de polyéthylène commercialisé par ABF PLASTIC sous la référence AF88, d'une épaisseur de 20 micromètres, et une mèche de fibres de polyéthylène commercialisé par Allied Fibers sous la référence SPECTRA 900, composée de 100 fibres ou mono-filaments d'un diamètre moyen de 50 micromètres. Dans les fibres, les macromolécules ont une masse moyenne supérieure à 500 000 et ne comportent pas ou très peu de ramifications, ce qui, combiné à un traitement d'étirage, conduit à un taux de cristallinité de 90%. La densité du matériau est de 0,97. Dans le film, les macromolécules ont une masse moyenne de 35 000 seulement et comportent un taux de ramification important sous forme de groupement méthyle, d'où un taux de cristallinité de 65% seulement. La densité n'est que de 0,92.

Les fibres unitaires peuvent facilement se déplacer les unes par rapport aux autres dans un plan perpendiculaire à la longueur de la mèche, et peuvent s'étaler aisément sur le film matriciel sur le tambour, au cours de l'enroulement de celle-ci, par suite de la tension longitudinale à laquelle elle est soumise. Le degré d'étalement, et par suite la largeur occupée par chaque spire de la mèche sur la génératrice du tambour, peuvent être ajustées en modifiant la position de la poulie 5 par rapport à l'axe 6 du tambour. Dans l'exemple on a fait en sorte que la largeur d'étalement soit d'environ 4 millimètres, ce qui correspond sensiblement à une juxtaposition des filaments dans un même plan le long de la génératrice. Le pas d'enroulement est également de 4 millimètres de façon à obtenir une disposition régulière de toutes les spires des fibres selon l'axe du tambour.

Le tambour a été placé pendant 30 minutes dans l'étuve à 115°C. Cette température est supérieure au point de fusion (105°C) du film de polyéthylène, qui a une masse moléculaire de 35 000 et un taux de cristallinité de 65%, et inférieure au point de fusion (145°C) des fibres, dont la masse moléculaire est supérieure à 500 000 et le taux de cristallinité de 90%.

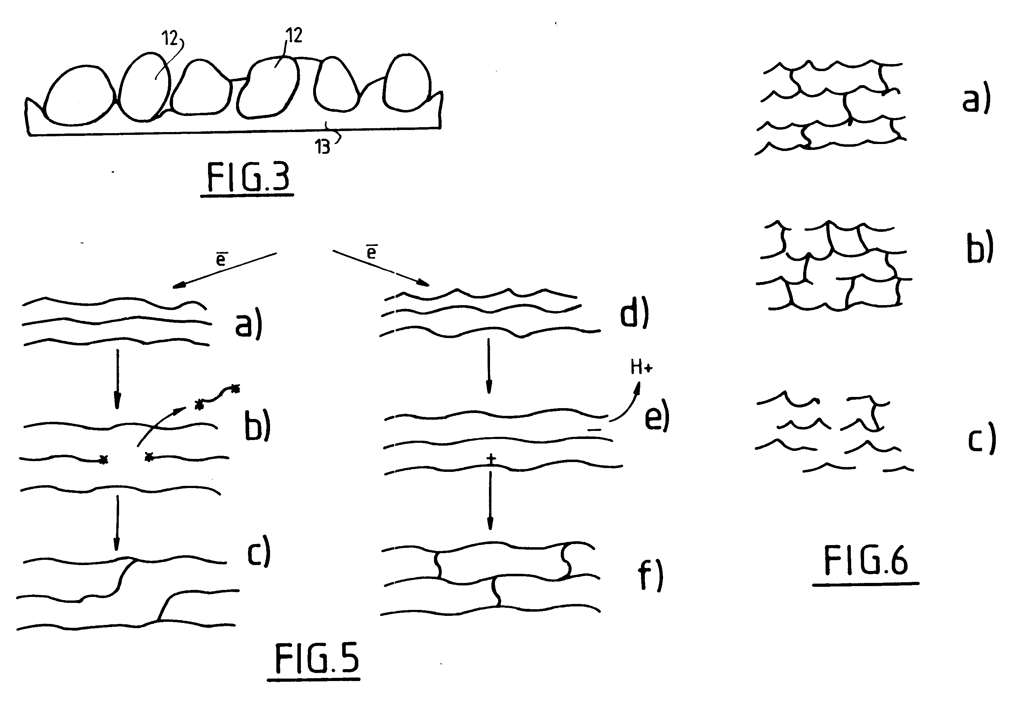

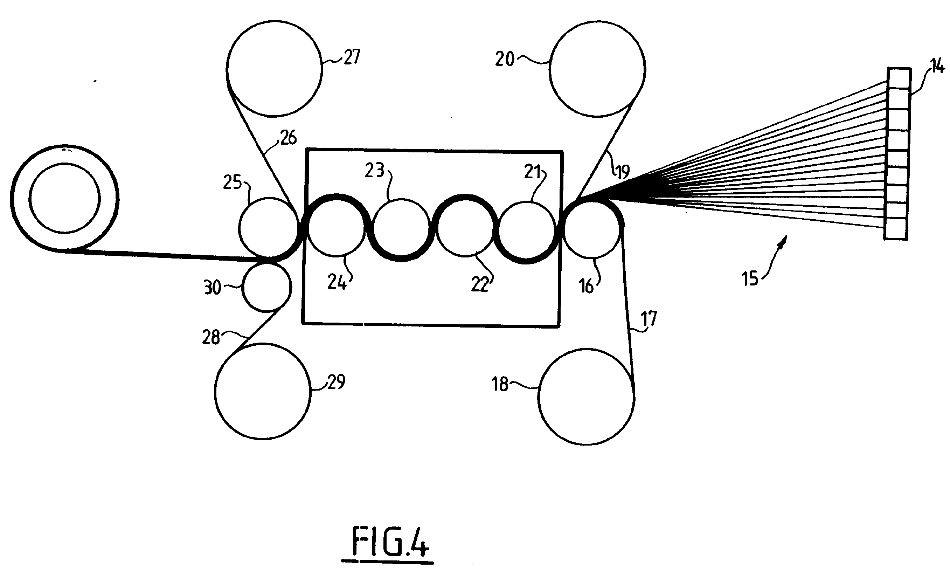

La figure 3 est une vue partielle de la couche préimprégnée obtenue après fusion et solidification de la matrice de polyéthylène, en coupe par un plan perpendiculaire à la direction des fibres. Les fibres 12 sont pratiquement juxtaposées et partiellement encastrées dans la matrice 13 formée par le film fondu puis solidifié. Une faible surface de contact entre les fibres et la matrice suffit néanmoins pour assurer une bonne cohésion du préimprégné en raison de l'excellente tenue interfaciale de ces éléments. Si on le désire, cette surface de contact peut être augmentée en faisant fondre le film thermoplastique en autoclave plutôt qu'en étuve et en appliquant une pression d'environ 10 bars lorsque la température de fusion est atteinte, après avoir dégazé sous un vide modéré pendant la mise en température.

Les applications des matériaux composites nécessitant généralement l'empilement d'une multiplicité de couches telles que celles obtenues par le procédé ci-dessus, les différentes couches de cet empilement peuvent être liées entre elles sous l'action de la chaleur et de la pression, dans une presse ou un autoclave, de la façon utilisée habituellement pour réaliser un matériau composite fibres-résine thermodurcissable à partir d'un empilement de couches de fibres préimprégnées. Au cours de ce traitement la matrice thermoplastique fond de nouveau et enrobe complétement les fibres des différentes couches. Ici encore la température de traitement se situe entre le point de fusion complète de la matrice et celui de la fibre, et de préférence entre 110 et 140°C pour les produits de départ utilisés dans l'exemple. De façon connue également, les fibres des différentes couches peuvent avoir des orientations différentes.

En variante, une couche, ou pli, préimprégnée peut être réalisée en mettant en place, autour de la structure bobinée comme montré à la figure 1, un second film thermoplastique semblable à celui sur lequel la mèche est enroulée, étroitement appliqué sur celle-ci. Au cours de l'étuvage ce second film fond également et se lie aux fibres. On obtient ainsi après incision latérale du préimprégné et déroulement un sandwich matrice-fibres-matrice. Dans ce sandwich, les fibres ne sont pas exposées aux agents mécaniques extérieurs, et ne risquent donc pas d'être désolidarisées de la matrice ou déplacées par rapport à celle-ci, comme cela pourrait arriver dans le cas du matériau préimprégné de la figure 3. Cette variante nécessite, pour obtenir le même taux volumique de fibres par rapport à l'ensemble du matériau composite, des films deux fois moins épais que dans le cas du procédé à un seul film, mais ceci rend la manipulation des préimprégnés plus aisée.

Enfin, si on veut conserver les couches préimprégnées avant utilisation, il est avantageux de placer sur le tambour 1, avant le film de polyéthylène, un autre film, par exemple de polyester thermoplastique, qui ne fondra pas et n'adhérera pas de façon définitive au polyéthylène lors de l'étuvage. Un second film de même nature est ensuite appliqué autour des fibres ou du second film de polyéthylène enroulé autour du tambour. Ces deux films assurent une protection de la couche préimprégnée contre les salissures et seront à retirer avant l'utilisation de celle-ci pour la réalisation d'un matériau préimprégné multicouche.

Le matériau préimprégné selon l'invention peut également être réalisé par un procédé en continu au moyen de l'installation représentée schématiquement à la figure 4. Cette installation comprend un dévidoir 14 propre à débiter une multiplicité de mèches de fibres 15 de façon qu'elles viennent s'enrouler côte à côte, parallèlement les unes aux autres, sur un premier cylindre 16 par-dessus un film de polyéthylène 17 se déroulant à partir d'un rouleau d'alimentation 18. Un second film de polyéthylène 19 fourni par un rouleau d'alimentation 20 vient recouvrir les mèches 15. L'ensemble formé par le film 17, les mèches 15 et le film 19 décrit un parcours sinueux sur le cylindre 16 et sur des cylindres 21, 22, 23, 24 et 25, qui forment un jeu de calandres, en étant légèrement serré entre deux cylindres successifs. Les cylindres 21 à 24 sont placés dans une étuve portée à une température convenable pour réaliser la fusion des films de polyéthylène. Le dévidoir 14, comme la bobine 2 de la figure 1, oppose une certaine résistance à l'avance des mèches, assurant une tension longitudinale sensiblement uniforme des fibres qui les constituent. Par ailleurs il est avantageux d'utiliser des films microperforés afin que l'air puisse s'évacuer de l'ensemble fibres-films.

Ici encore, des films protecteurs peuvent être appliqués de part et d'autre de la couche préimprégnée. Dans l'installation illustrée, un film 26 fourni par un rouleau d'alimentation 27 est amené sur le cylindre 25, au-dessous de la couche préimprégnée, et un second film 28, fourni par un rouleau d'alimentation 29, est appliqué par-dessus la couche préimprégnée par un cylindre applicateur 30.

Les figures 5 et 6 illustrent schématiquement les effets possibles de l'irradiation d'une résine thermoplastique. Le schéma a de la figure 5 représente des macromolécules linéaires disposées sensiblement parallèlement les unes aux autres, et qui peuvent relativement facilement glisser les unes par rapport aux autres pour permettre une déformation de la résine thermoplastique. L'irradiation par bombardement d'un faisceau d'électrons accélérés peut conduire à l'arrachement d'un tronçon d'une molécule, comme indiqué au schéma b, créant des sites actifs aux points de rupture de la chaîne. Ces sites actifs peuvent provoquer à leur tour des liaisons avec des chaînes voisines (schéma c).

A partir du même état initial (schéma d), l'irradiation par bombardement d'un faisceau d'électrons accélérés peut également conduire à la formation de sites actifs par arrachement de particules, par exemple de protons, sans rupture des chaînes (schéma e). Ces sites actifs produisent également des pontages entre chaînes (schéma f), c'est-à-dire une réticulation qui diminue le fluage de la matrice, laquelle tend à perdre son caractère thermoplastique et à acquérir des propriétés mécaniques proches de celles d'une résine thermodurcissable.

La figure 6 montre que si une irradiation modérée conduit à une réticulation pratiquement sans dégradation des chaînes macromoléculaires (schéma a), une irradiation plus importante conduit à une dégradation qui détruit en partie les effets bénéfiques de la réticulation (schéma b), puis à une dégradation très importante (schéma c).

Les inventeurs ont découvert qu'il est possible, dans un matériau composite fibres-matrice thermoplastique, de consolider la matrice thermoplastique par irradiation sans détériorer les fibres ni la liaison entre celles-ci et la matrice. Il en est ainsi même dans le cas où les fibres sont également thermoplastiques et plus particulièrement dans celui où elles ont la même nature chimique que la matrice. Il suffit pour cela que les fibres soient moins sensibles à l'irradiation que la matrice, grâce à une masse moléculaire et/ou à un taux de cristallinité plus élevé, et que la dose d'irradiation soit judicieusement choisie.

On a ainsi procédé à des essais d'irradiation sur un matériau composite réalisé à partir des fibres de polyéthylène SPECTRA 900 et des films de polyéthylène AF88 précités, au moyen d'un appareil construit par la Compagnie Générale de Radiologie, d'une puissance de 7 kW, fournissant un faisceau d'électrons d'une énergie de 6 MeV. Pour limiter l'échauffement, les échantillons ont défilé plusieurs fois sous le faisceau jusqu'à ce que la dose voulue ait été reçue. Ces échantillons ont été réalisés avec un taux volumique de fibres de 0,58, inférieur au taux optimal qui est de manière habituelle compris entre 0,6 et 0,7, et est d'environ 0,65 pour le type de matériau considéré, ceci afin d'avoir une quantité de matrice plus élevée et de mieux mettre en évidence les effets de l'irradiation sur celle-ci. Les doses d'irradiation utilisées ont été de 15, 20 et 30 Mrad.

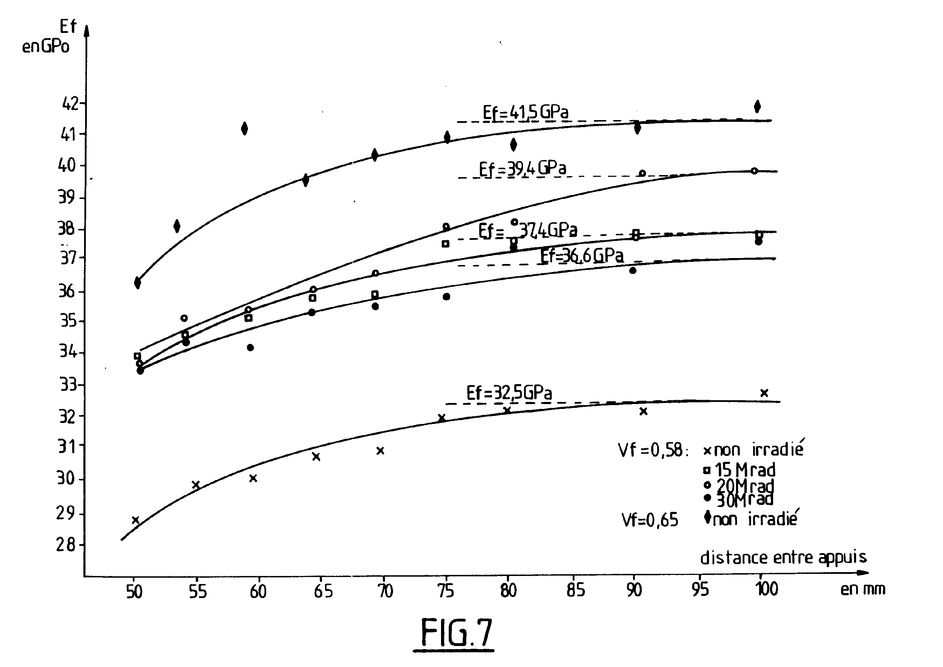

Le module de flexion a été déterminé sur les échantillons ainsi irradiés, ainsi que sur des échantillons non irradiés ayant des taux volumiques de fibres de 0,58 et 0,65. Les résultats sont donnés à la figure 7. Les valeurs du module de flexion sont de 32,5 GPa, 37,4 GPa, 39,4 GPa et 36,6 GPa respectivement pour les échantillons à V_{F} = 0,58 (taux de fibres) non irradié et irradiés à 15, 20 et 30 Mrad. Ceci indique que la dose d'irradiation optimale est de l'ordre de 20 Mrad, et qu'un taux de 30 Mrad est trop élevé.

L'échantillon à V_{F} = 0,65 non irradié a un module de flexion de 40,5 GPa, supérieur à ceux de tous les échantillons à V_{F} = 0,58, ce qui montre l'importance primordiale du taux de fibres.

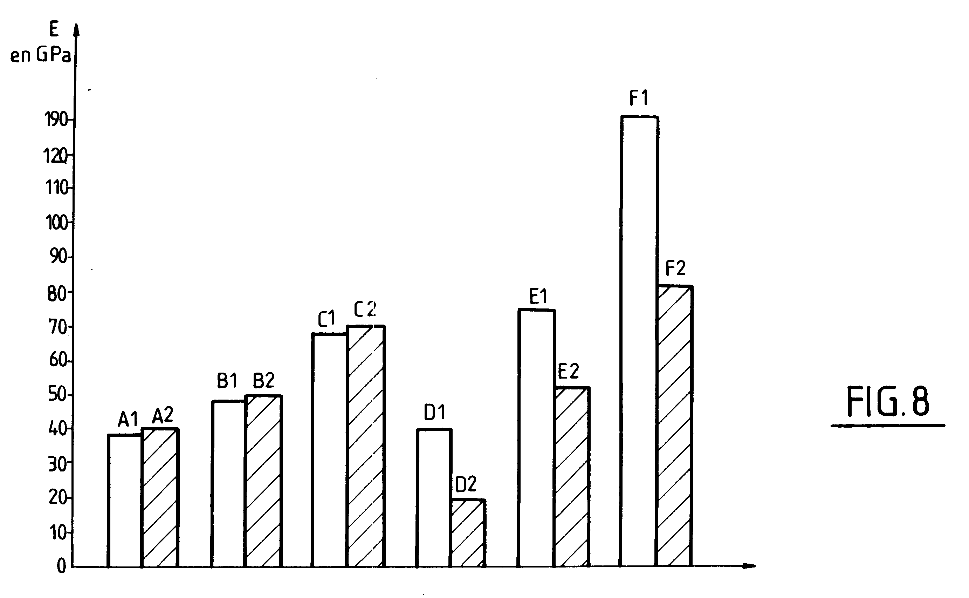

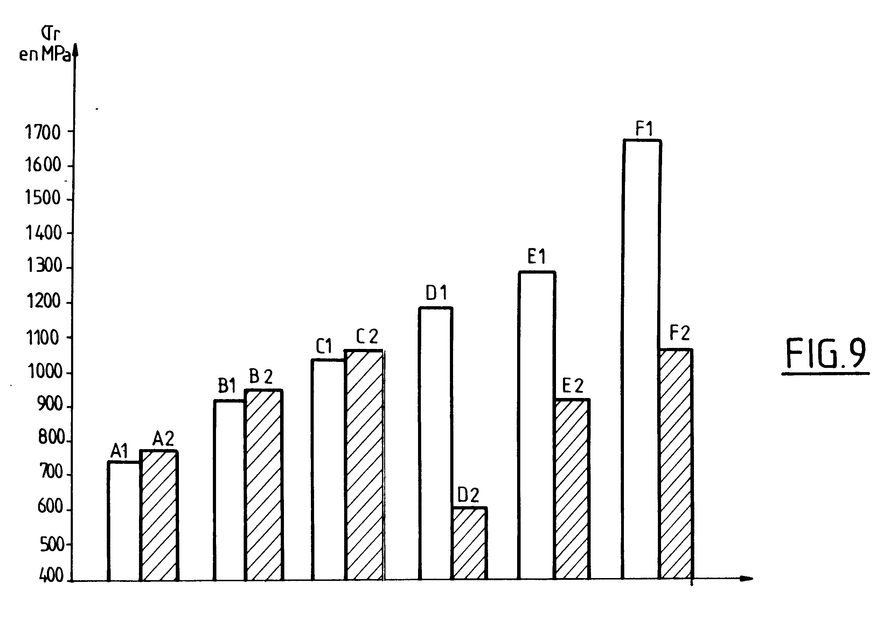

Les diagrammes des figures 8 et 9 permettent de comparer les propriétés mécaniques du matériau composite polyéthylène-polyéthylène selon l'invention à celles de matériaux composites connus à matrice époxyde. Les caractéristiques de tous les matériaux composites ont été déterminées à 20°C, c'est-à-dire sensiblement au-dessous de la température de transition vitreuse de la résine époxyde (de l'ordre de 180°C), et sensiblement au-dessus de la température de transition vitreuse du polyéthylène (- 110°C), donc pour ce dernier dans le domaine viscoélastique. Pour compléter la comparaison, des mesures ont également été faites sur le matériau composite selon l'invention à - 75°C, température plus proche de l'état vitreux.

A la figure 8 la longueur des bandes blanches A1 à C1 représente le module d'élasticité E en GPa du matériau composite polyéthylène-polyéthylène, et celle des bandes blanches D1 à F1 représente la même caractéristique pour des matériaux composites à matrice époxyde et fibres de verre, de Kevlar et de carbone respectivement. Le module de la bande A1 correspond à un taux de fibres de 0,58 et les valeurs B1 et C1 au taux de 0,65, qui est aussi celui des matériaux composites à matrice époxyde. Les modules A1 et B1 ont été mesurés à 20°C, et la valeur C1 à - 75°C. Les bandes hachurées A2 à F2 représentent les modules d'élasticité spécifiques correspondants, c'est-à-dire le quotient du module d'élasticité E par la densité du matériau.

A la figure 9, les bandes blanches A1 à F1 et les bandes hachurées A2 à F2 représentent la contrainte à la rupture σᵣ et la contrainte à la rupture spécifique des mêmes matériaux, déterminées aux mêmes températures.

A la température ordinaire, la rigidité du matériau composite polyéthylène-polyéthylène est légèrement supérieure à celle d'un matériau composite verre-époxyde, alors que pour la contrainte à la rupture les résultats sont inversés. Les valeurs spécifiques sont nettement à l'avantage du premier. Le module spécifique de celui-ci est sensiblement équivalent à celui du matériau composite Kevlar-époxyde, et sa contrainte spécifique dépasse celle de ce dernier. A - 75°C, les propriétés spécifiques du matériau composite polyéthylène-polyéthylène atteignent celles du matériau composite carbone-époxyde, laissant loin derrière les valeurs spécifiques du matériau verre-époxyde.

Le matériau composite polyéthylène-polyéthylène présente une série de propriétés qui le rendent particulièrement intéressant dans diverses applications, notamment pour la réalisation des superstructures de véhicules navals ou aériens, des radômes, des gilets pare-balles, des containeurs. Parmi ces propriétés, on peut citer :
- une faible masse volumique, qui est inférieure à celle de l'eau et conduit à des résistances spécifiques élevées pouvant dépasser celles des structures traditionnelles en fibres de verre et résine thermodurcissable ;
- d'excellentes propriétés diélectriques (tangente de l'angle de perte et permittivité extrêmement faibles), entraînant la transmission de la presque totalité d'un signal radar ;
- une forte résistance à l'impact, permettant la réalisation de blindages ;
- une température de transition vitreuse peu élevée, améliorant les propriétés mécaniques à l'approche des basses températures et permettant des applications dans les structures froides, voire cryogéniques ;
- une excellente résistance chimique et une absence d'absorption d'eau, favorables au conditionnement de produits acides ou basiques par exemple.

L'invention est également applicable à la réalisation d'autres types de matériaux composites fibres-résine thermoplastique. On peut citer à titre d'exemple des matériaux composites carbone-résine thermotrope dans lesquels les molécules de la résine sont orientées préférentiellement dans la direction transversale à celle des fibres. Un procédé en continu pour réaliser une couche d'un tel matériau consisterait à faire circuler une bande de film de résine, étirée longitudinalement pour orienter les molécules, perpendiculairement à la direction de circulation des mèches de fibres, et non parallèlement à celles-ci comme dans le procédé illustré à la figure 4, et à interrompre périodiquement la circulation du film et celle des fibres pour réaliser l'imprégnation des fibres par la résine sous presse, à la température de fusion de cette dernière et sous une forte pression compte tenu de sa viscosité particulièrement élevée à l'état fondu.

## Revendications

1. Procédé de fabrication d'un matériau composite constitué de l'empilement de couches d'un matériau préimprégné comprenant une matrice thermoplastique (13) renforcée par des fibres longues (12), caractérisé en ce que, pour réaliser chacune des couches de préimprégné, on presse contre une face d'au moins un film (17) thermoplastique des brins sensiblement parallèles (15) d'une mèche de fibres, toutes les fibres des brins étant soumises à une tension sensiblement uniforme dans leur direction longitudinale, on chauffe le film à une température inférieure à la température de fusion des fibres, tout en étant suffisante pour le faire fondre à l'état pâteux, au moins partiellement, en mouillant, au moins en partie, la surface de toutes les fibres, et on refroidit la matrice thermoplastique de façon à la solidifier en immobilisant les fibres et en les maintenant sous tension, pour obtenir une couche de matériau préimprégné dans laquelle toutes les fibres sont sensiblement parallèles et équitendues.

2. Procédé selon la revendication 1, caractérisé en ce qu'on dispose les brins (15) entre deux films (17,19) thermoplastiques, les brins étant pressés contre les faces en regard des deux films, et ceux-ci étant tous deux fondus pour mouiller la surface des fibres.

3. Procédé selon l'une des revendications 1 et 2, caractérisé en ce qu'on enroule un film thermoplastique autour d'un tambour (1), qu'on enroule une mèche (8) de fibres par-dessus le film circonférentiellement et avec un pas équivalent à la largeur de la mèche, une première extrémité de la mèche étant fixée par rapport au tambour en début d'enroulement, la mèche étant maintenue sous tension longitudinale au cours de l'enroulement et la seconde extrémité de la mèche étant fixée par rapport au tambour en fin d'enroulement, qu'on enroule le cas échéant un second film thermoplastique autour de la mèche enroulée, et qu'on découpe l'enroulement préimprégné résultant selon une génératrice du tambour après solidification de la matrice, pour obtenir une couche de matériau préimprégné comportant des fibres séparées parallèles.

4. Procédé selon la revendication 3, caractérisé en ce que le second film est microperforé.

5. Procédé selon l'une des revendications 1 et 2, caractérisé en ce qu'on dispose une multiplicité de mèches parallèles continues (15) côte à côte sur une bande continue (17) de film thermoplastique et qu'on fait avancer l'ensemble dans un jeu de calandres (21,24) dans une enceinte où règne ladite température, les mèches étant soumises à une tension longitudinale au cours de leur déplacement.

6. Procédé selon la revendication 5, caractérisé en ce que les mèches (15) sont placées entre deux bandes (17,19) de film thermoplastique.

7. Procédé selon l'une des revendications 5 et 6, caractérisé en ce que la mise en contact des fibres et du ou des films se fait sous pression réduite.

8. Procédé selon l'une des revendications précédentes, caractérisé en ce qu'on empile une multiplicité de couches de matériau préimprégné et en ce qu'on les lie ensemble par la chaleur et la pression pour obtenir le matériau composite.

9. Procédé selon la revendication 8, caractérisé par l'étape complémentaire consistant à irradier le matériau composite par un faisceau de rayons électromagnétiques ou de particules à une dose convenable pour provoquer une réticulation de la matrice sans dégradation des fibres.

10. Procédé selon l'une des revendications précédentes, caractérisé en ce que ladite matrice thermoplastique est du polyéthylène.

11. Procédé selon la revendication 10, caractérisé en ce que les fibres sont également en polyéthylène ayant une masse moléculaire et/ou un taux de cristallinité plus élevés que ceux de la matrice.

12. Procédé selon la revendication 11, caractérisé en ce que la masse moléculaire des fibres est supérieure à 500 000 et celle de la matrice d'environ 35 000.

13. Procédé selon l'une des revendications 11 et 12, caractérisé en ce que le taux de cristallinité des fibres est d'environ 90% et celui de la matrice d'environ 65%.

14. Procédé selon la revendication 9 et selon l'une des revendications 10 à 13, caractérisé en ce qu'on irradie le matériau composite par un faisceau d'électrons à une dose de l'ordre de 15 à 20 Mrad.

15. Matériau composite comprenant une matrice thermoplastique (13) renforcée par des fibres longues (12), caractérisé en ce qu'il est obtenu par la mise en oeuvre du procédé selon l'une quelconque des revendications précédentes, et en ce que les fibres de chacune des couches s'étendent sensiblement dans une même direction et sont soumises à une tension sensiblement uniforme, et en ce que toutes les fibres sont au moins partiellement encastrées dans la matrice thermoplastique.

16. Matériau composite selon la revendication 15, caractérisé en ce que la matrice est réticulée.

## Patentansprüche

1. Verfahren zum Herstellen eines Verbundwerkstoffs aus einer Stapelung von Lagen aus einem vorimprägnierten Material mit einer durch lange Fasern (12) verstärkten Thermoplastmatrix (13),
**dadurch** **gekennzeichnet,**
daß zum Herstellen jeder Lage des vorimprägnierten Materials im wesentlichen parallele Fäden (15) eines Strangs aus Fasern gegen eine Seite wenigstens eines Thermoplastfilms (17) gepreßt werden, wobei alle Fasern der Fäden in ihrer Längsrichtung einer im wesentlichen gleichmäßigen Spannung unterworfen werden, daß der Film auf eine Temperatur unter der Schmelztemperatur der Fasern erhitzt wird, die dabei dennoch ausreicht, um ihn wenigstens teilweise in den pastischen Zustand schmelzen zu lassen, wobei die Oberfläche aller Fasern wenigstens zum Teil benetzt wird, und daß die Thermoplastmatrix so abgekühlt wird, daß sie verfestigt wird, wobei die Fasern festgelegt und unter Spannung gehalten werden, um eine Lage aus vorimprägniertem Material zu erhalten, in der alle Fasern im wesentlichen parallel und gleich gespannt sind.

2. Verfahren nach Anspruch 1,
dadurch gekennzeichnet,
daß die Fäden (15) zwischen zwei Thermoplastfilmen (17, 19) angeordnet werden, wobei die Fäden gegen die gegenüberliegenden Seiten der beiden Filme gepreßt und diese alle beide geschmolzen werden, um die Oberflächen der Fasern zu benetzen.

3. Verfahren nach einem der Ansprüche 1 und 2,
dadurch gekennzeichnet,
daß ein Thermoplastfilm um eine Trommel (1) gewickelt wird, daß ein Strang (8) aus Fasern am Umfang mit einem Schritt, der der Breite des Strangs entspricht, über den Film gewickelt wird, wobei ein erstes Ende des Strangs zu Beginn des Wicklung bezüglich der Trommel festgelegt ist, wobei der Strang im Lauf des Wickelns unter Längsspannung gehalten wird und das zweite Ende des Strangs am Ende der Wicklung bezüglich der Trommel festgelegt ist, daß gegebenenfalls ein zweiter Thermoplastfilm um den gewickelten Strang gewickelt wird, und daß die resultierende vorimprägnierte Wicklung nach der Verfestigung der Matrix längs einer Erzeugenden der Trommel zugeschnitten wird, um eine Lage aus vorimprägniertem Material mit getrennten, parallelen Fasern zu erhalten.

4. Verfahren nach Anspruch 3,
dadurch gekennzeichnet,
daß der zweite Film mikroperforiert ist.

5. Verfahren nach einem der Ansprüche 1 und 2,
dadurch gekennzeichnet,
daß eine Vielzahl von kontinuierlichen, parallelen Strängen (15) Seite an Seite auf einem kontinuierlichen Band (17) aus einem Thermoplastfilm angeordnet werden und die Einheit in einem Satz von Kalandern (21, 24) in einem Raum vorgeschoben wird, in dem die Temperatur herrscht, wobei die Stränge im Lauf ihrer Verschiebung einer Längsspannung unterworfen werden.

6. Verfahren nach Anspruch 5,
dadurch gekennzeichnet,
daß die Stränge (15) zwischen zwei Bänder (17, 19) aus Thermoplastfilm gesetzt sind.

7. Verfahren nach einem der Ansprüche 5 und 6,
dadurch gekennzeichnet,
daß die Fasern und der oder die Filme unter reduziertem Druck in Kontakt gebracht werden.

8. Verfahren nach einem der vorhergehenden Ansprüche,
dadurch gekennzeichnet,
daß eine Vielzahl von Lagen aus vorimprägniertem Material gestapelt wird, und daß sie durch Wärme und Druck miteinander verbunden werden, um den Verbundwerkstoff zu erhalten.

9. Verfahren nach Anspruch 8,
gekennzeichnet
durch den komplementären Schritt, der darin besteht, den Verbundwerkstoff mit einem Bündel elektromagnetischer Strahlen oder Teilchen in einer geeigneten Dosis zu bestrahlen, um eine Vernetzung der Matrix ohne Beschädigung der Fasern hervorzurufen.

10. Verfahren nach einem der vorhergehenden Ansprüche,
dadurch gekennzeichnet,
daß die Thermoplastmatrix Polyethylen ist.

11. Verfahren nach Anspruch 10,
dadurch gekennzeichnet,
daß die Fasern ebenfalls aus Polyethylen mit einer höheren molaren Masse und/oder einer Kristallinitätsrate als die der Matrix bestehen.

12. Verfahren nach Anspruch 11,
dadurch gekennzeichnet,
daß die molare Masse der Fasern über 500 000 und diejenige der Matrix bei etwa 35 000 liegt.

13. Verfahren nach einem der Ansprüche 11 und 12,
dadurch gekennzeichnet,
daß die Kristallinitätsrate der Fasern bei etwa 90 % und diejenige der Matrix bei etwa 65 % liegt.

14. Verfahren nach Anspruch 9 und nach einem der Ansprüche 10 bis 13,
dadurch geknnzeichnet,
daß der Verbundwerkstoff mit Elektronenstrahlen in einer Dosis in der Größenordnung von 15 bis 20 Mrad bestrahlt wird.

15. Verbundwerkstoff mit einer mit langen Fasern (12) verstärkten Thermoplastmatrix (13),
dadurch gekennzeichnet,
daß er durch die Durchführung des Verfahrens nach einem der vorhergehenden Ansprüche erhalten ist, und daß sich die Fasern jeder Lage im wesentlichen in der gleichen Richtung erstrecken und einer im wesentlichen gleichmäßigen Spannung unterworfen sind, sowie daß alle Fasern wenigstens teilweise in die Thermoplastmatrix eingelassen sind.

16. Verbundwerkstoff nach Anspruch 15,
dadurch gekennzeichnet,
daß die Matrix vernetzt ist.

## Claims

1. Method for manufacture of a composite material consisting of a stack of layers of a pre-impregnated material comprising a thermoplastic matrix (13) reinforced by long fibres (12), characterized in that, to produce each of the layers of pre-impregnate, substantially parallel strands (15) of a sliver of fibres is pressed against one face of at least one thermoplastic film (17), all the fibres of the strands being subjected to a substantially uniform tension in their longitudinal direction, the film is heated to a temperature less than the melting temperature of the fibres, whilst being sufficient to melt it into the pasty state, at least partially, by wetting, at least in part, the surface of all the fibres, and the thermoplastic matrix is cooled so as to solidify it while immobilizing the fibres and holding them under tension, in order to obtain a layer of pre-impregnated material in which all the fibres are substantially parallel and equally tensioned.

2. Method according to Claim 1, characterized in that the strands (15) are arranged between two thermoplastic films (17, 19), the strands being pressed against the opposite faces of the two films, and these being both melted to wet the surface of the fibres.

3. Method according to one of Claims 1 and 2, characterized in that a thermoplastic film is wound around a drum (1), a sliver (8) of fibres is wound over the film circumferentially and with a pitch equivalent to the width of the sliver, a first end of the sliver being fixed with respect to the drum at the start of winding, the sliver being held under longitudinal tension during the winding and the second end of the sliver being fixed with respect to the drum at the end of winding, in that a second thermoplastic film is, if appropriate, wound around the wound sliver, and in that the pre-impregnated winding is cut along a generatrix of the drum after solidification of the matrix, in order to obtain a layer of pre-impregnated material including parallel separate fibres.

4. Method according to Claim 3, characterized in that the second film is microperforated.

5. Method according to one of Claims 1 and 2, characterized in that a multiplicity of continuous parallel slivers (15) is arranged side by side on a continuous web (17) of thermoplastic film and in that the whole is advanced in a set of calenders (21, 24) in an enclosure which is at the said temperature, the slivers being subjected to a longitudinal tension during their movement.

6. Method according to Claim 5, characterized in that the slivers (15) are placed between two webs (17, 19) of thermoplastic film.

7. Method according to one of Claims 5 and 6, characterized in that the placing in contact of the fibres and of the film or films is carried out under reduced pressure.

8. Method according to one of the preceding claims, characterized in that a multiplicity of layers of pre-impregnated material is stacked and in that they are bound together by heat and pressure in order to obtain the composite material.

9. Method according to Claim 8, characterized by the complementary step consisting in irradiating the composite material with a beam of electromagnetic rays or particles at a dose suitable for causing cross-linking of the matrix without degradation of the fibres.

10. Method according to one of the preceding claims, characterized in that the said thermoplastic matrix is polyethylene.

11. Method according to Claim 10, characterized in that the fibres are also of polyethylene, with a molecular mass and/or a level of crystallinity higher than those of the matrix.

12. Method according to Claim 11, characterized in that the molecular mass of the fibres is greater than 500,000 and that of the matrix approximately 35,000.

13. Method according to one of Claims 11 and 12, characterized in that the level of crystallinity of the fibres is approximately 90% and that of the matrix approximately 65%.

14. Method according to Claim 9 and according to one of Claims 10 to 13, characterized in that the composite material is irradiated with an electron beam at a dose of the order of 15 to 20 Mrad.

15. Composite material comprising a thermoplastic matrix (13) reinforced by long fibres (12), characterized in that it is obtained by implementing the method according to any one of the preceding claims, and in that the fibres of each of the layers extend substantially in the same direction and are subjected to a substantially uniform tension, and in that all the fibres are at least partially embedded in the thermoplastic matrix.

16. Composite material according to Claim 15, characterized in that the matrix is cross-linked.
